# EUROPEAN PATENT APPLICATION

(11) **EP 3 031 506 A1**
(43) Date of publication of application: **15.06.2016**
(21) Application number: 15460059.7
(22) Date of filing: 31.08.2015
(51) Int. Cl.: B01D 45/12, B01D 50/00, B04C 1/00, B01D 46/24

(54) **CYCLOFILTER WITH A BATTERY OF CYCLONES WITH LATERAL DUST DISTRIBUTION**

(30) Priority: 08.12.2014 UA 2014013109
(71) Applicant: Svoboda Piotr Slebioda, 76-200 Slupsk (PL)
(72) Inventor: Slebioda, Piotr, 62-002 Suchy Las (PL)
(74) Representative: Luczak, Jerzy

(57) **Abstract**

The cyclofilter with a cyclone battery with lateral dust distribution relates to cyclone shape filters for the dry gas cleaning processes which can be used in chemical industry, food processing, metallurgy, wood transformation, construction etc.

The cyclofilter consists of a structure support, mounted on it a collector (2) dust, cyclones battery (3) installed over the dust collector (2), with a installed on polluted gas inlet duct, a cleaned gas outlet duct and horizontal bag filter (6), installed in between the dust collector (2) and the cyclones (3). The horizontal bag filter (6) is installed in the dust collector (2) creating a gap formed between horizontal bag filter (6) and the inner wall of the dust collector (2). The cyclones (3) are equipped with secondary gas outlet ducts, surrounded by dust guides fully covering the bottom parts of cyclones (3). In other embodiment the cyclones (3) are equipped with secondary gas outlet ducts (8), on which ones are mounted rotative dust guides (10).

## Description

The invention relates to cyclone-type separators for dry cleaning of gases from dust and can be used in chemical industry, food processing, metallurgy, wood treatment, etc.

Separators of cyclone-type are common devices for dry cleaning of gases from dust.

The well known separator PL 216 644, consisting of a support, a dust collector, a cyclones battery, polluted gas inlet duct, cleaned gas outlet duct and a horizontal bag filter. The unit operates as follow. Through the polluted gas inlet duct a polluted gas passes to cyclones where under centrifugal force is cleaned of solid particles which accumulate on the cyclone walls than next fall to the dust collector. The cleaned gas passes by the cleaned gas outlet duct is sucked out of cyclones.

Nevertheless this way takes about 70% of the gas volume, the other part is taken to the dust collector. From the dust collector the gas passes to the horizontal bag filter in which one it is cleaned.

However this unit has a significant disadvantage due to the fact that gas on the horizontal bag filter is supplied trough a dust collector. This results in heavy load of additional dust for the regeneration of the filter bags.

The closest to the claimed invention is the cyclofilter as described in PL 202788, which comprises a support structure, a hopper, a cyclone battery, a polluted gas inlet duct, cleaned gas outlet duct and a horizontal bag filter. This device works as follows. The polluted gas is introduced trough the polluted gas inlet duct into the cyclones and under the centrifugal force gives away the solid particles which accumulate on the cyclone walls than next fall to the dust collector. The cleaned gas is evacuated from the cyclone trough the cleaned gas outlet duct. Nevertheless this way takes about 70% of the gas volume, the other part is taken to the horizontal bag filter, mounted under the cyclone battery, where the cleaning process continues. However such unit also has a significant disadvantage due to the fact that the horizontal bag filter, as described previously, it receives an important additional load of dust. This results in important additional energy expenditure for the regeneration of the filter bags.

As a base for this invention is a task to create a cyclofilter with a modified design of the cyclones and the housing which enables a reduction of the energy expenditure for the regeneration of the horizontal filter bags and also which enables an increase of the efficiency of the gas cleaning process.

The problem is solved in the present invention by a cyclofilter with a cyclone battery with lateral dust distribution. The cyclofilter is composed of a support structure upholding a dust collector, a cyclone battery installed above the dust collector, a polluted gas inlet duct connected to the cyclone battery, cleaned gas outlet ducts, and a horizontal bag filter, mounted between the hopper and the cyclone battery, the horizontal bag filter installed into the dust collector so apertures are created between the internal wall of the collector and the filter, also in the lower part of cyclones are installed secondary outlet ducts surrounded by dust guides fully covering the bottom parts of cyclones.

The task so defined in another embodiment of this invention is characterized by that on the secondary gas outlet ducts are mounted rotative dust guides.

The present invention, in an exemplary, but not exhaustive embodiment, is visualized in the drawings:

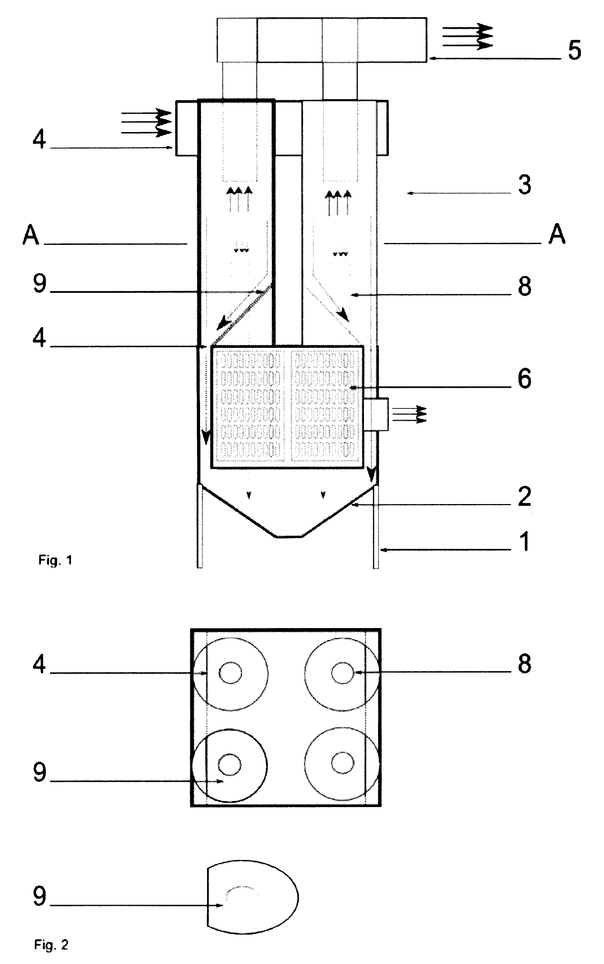

Figure 1 - a general view of the first embodiment of the cyclofilter with a cyclone battery with lateral dust distribution.
Figure 2 - section A-A of Figure 1

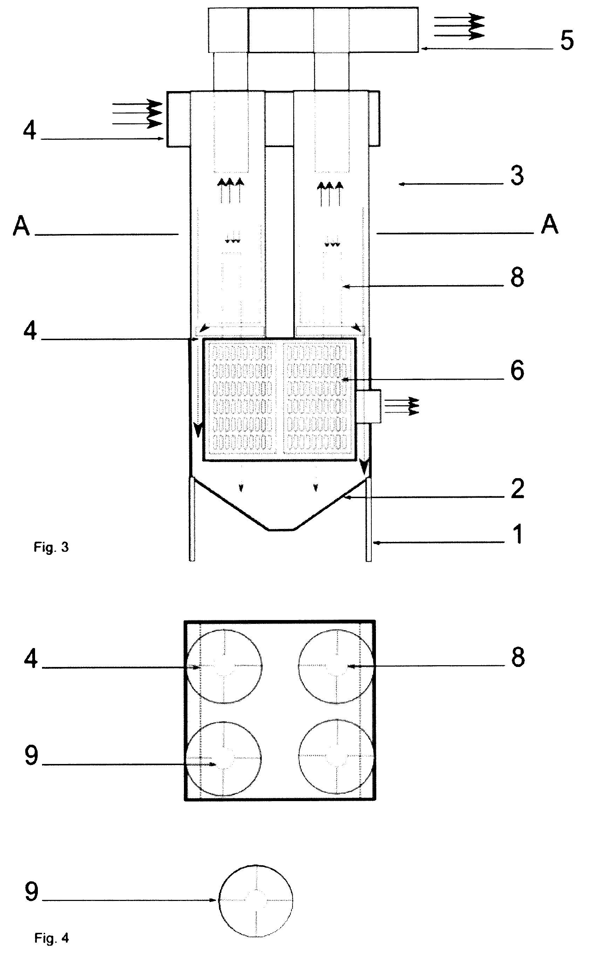

Figure 3 - general view of the second embodiment of the cyclofilter with a cyclone battery with lateral dust distribution.
Figure 4 - section A-A of Figure 3

The cyclofilter with a cyclone battery with lateral dust distribution consists of a structure support 1 mounted on it a collector dust 2, cyclones battery 3 installed over the collector of dust 2 with a mounted on it polluted gas inlet duct 4, a cleaned gas outlet duct 5 and horizontal bag filter 6, located between the dust collector 2 and the cyclones battery 3. Horizontal bag filter 6 is installed in the dust collector 2 so a gap 7 is formed between horizontal bag filter 6 and the inner wall of the dust collector 2. The cyclones 3 are equipped with secondary gas outlet ducts 8, surrounded by inclined plates 9 fully covering the bottom parts of cyclones.

The cyclofilter works as follows. The polluted gas passes through the polluted gas inlet duct 4 to the cyclones battery 3 where, under the centrifugal force, deprives solid particles which accumulate on the cyclone 3 walls than the particles fall down on the inclined plates 9 through the gaps 7 to the dust collector 2. A part of so cleaned gas is evacuated by the cleaned gas outlet ducts 5, other part through the secondary outlet ducts 8 goes passes to the horizontal bag filter 6.

In the second embodiment the cyclofilter is composed of a structure support 1 mounted on it a collector dust 2, cyclones battery 3 installed over the collector of dust 2 with a mounted on it polluted gas inlet duct 4, a cleaned gas outlet duct 5 and horizontal bag filter 6, located between the dust collector 2 and the cyclones 3. Horizontal bag filter 6 is installed in the dust collector 2, so a gap 7 is formed between horizontal bag filter 6 and the inner wall of the dust collector 2. The cyclones 3 are equipped with gas outlet ducts 8, on which ones are mounted rotative dust guides 10.

In this embodiment the claimed cyclofilter works as follows. The polluted gas passes through the polluted gas inlet duct 4 to the cyclones 3 where, under the centrifugal force, deprives solid particles which accumulate on the cyclone 3 walls than the particles fall down to the rotative dust guides 10 than fall down through the gaps 7 to the dust collector 2. A part of so cleaned gas is evacuated by the cleaned gas outlet ducts 5, other part through the outlet ducts 8 goes passes to the horizontal bag filter 6.

In both embodiments of the cyclofilter, the accumulated dust is evacuated trough the gap made between the bag filter and the dust collector, the gas arriving on the bag filter is less loaded in particles. It improves considerably the quality of the gas treatment and it reduces the cost of the exploitation of the bag filter.

## Claims

1. The cyclofilter with a cyclone battery with lateral dust distribution consists of a structure support, mounted on it a collector dust, cyclones battery installed over the dust collector, with a installed on polluted gas inlet duct, a cleaned gas outlet duct and horizontal bag filter, installed in between the dust collector and the cyclones, **characterized in that** the horizontal bag filter (6) is installed in the dust collector (2) creating a gap formed between horizontal bag filter (6) and the inner wall of the dust collector (2) wherein the cyclones (3) are equipped with gas secondary outlet ducts (8), surrounded by dust guides fully covering the bottom parts of cyclones (3).

2. The cyclofilter as described in point 1, **characterized in that** the cyclones (3) are equipped with gas outlet ducts (5), on which ones are mounted rotative dust evacuation elements (10).
